# EUROPEAN PATENT APPLICATION

(11) **EP 4 294 081 A1**
(43) Date of publication of application: **20.12.2023**
(21) Application number: 23192963.9
(22) Date of filing: 24.05.2016
(51) Int. Cl.: H04W 40/16, H04W 84/12

(54) **BIDIRECTIONAL REDUNDANT MESH NETWORKS**

(30) Priority: 05.06.2015 US 201514731803
(62) Divisional of application: 16171186.6
(71) Applicant: Honeywell International Inc., Morris Plains NJ 07950 (US)
(72) Inventor: BEREZOWSKI, Andrew G., Morris Plains, 07950 (US); OTIS, Jesse J., Morris Plains, 07950 (US); PEARSON, Charles T., Morris Plains, 07950 (US)
(74) Representative: Houghton, Mark Phillip

(57) **Abstract**

A redundant mesh communications network uses multiple controllers, or controller gateways to route messages and to monitor the integrity of wired and wireless mesh system elements. The multiple control units and multiple paths provide various redundant communications solutions thereby avoiding a single point of failure in the network.

## Description

### FIELD

The application pertains to bidirectional mesh networks that provide redundant communications paths. More particularly, the application pertains to such networks which incorporate multiple controllers or controller gateways and multiple communications paths.

### BACKGROUND

Systems are known to protect people and assets within secured areas. Such systems are typically based upon the use of one more wireless detectors that respond to threats within the secured area.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, detectors, or, sensors may be placed in different areas based upon the respective uses of those areas. For example, if people are present during some portions of a normal day and not at other times, then detectors may be placed along a periphery of the space to provide protection while the space is occupied while additional sensors may be placed within an interior of the space and used when the space is not occupied.

In most cases, threat detectors are connected to a local control panel. In the event of a threat detected via one of the detectors, the control panel may sound a local audible alarm. The control panel may also send a signal to a displaced monitoring station.

While conventional security systems using wireless detectors work well, they are sometimes subject to unexpected failures. For example, fire and security systems that employ mesh networks with single controllers have a single point of failure that could result in lost communications to one or more areas protected by the system. A need exists for better methods and apparatus for diagnosing such systems.

### BRIEF DESCRIPTION OF THE DRAWINGS

Fig. 1 illustrates a block diagram of a system in accordance herewith;
Fig. 2 illustrates a block diagram of a second system in accordance herewith;
Fig. 3 illustrates a block diagram of a third system in accordance herewith;
Fig. 4 illustrates a block diagram of a fourth system in accordance herewith;
Fig. 5 illustrates a block diagram of a fifth system in accordance herewith;
Fig. 6 illustrates a block diagram of a sixth system in accordance herewith;
Fig. 7 illustrates a block diagram of a seventh system in accordance herewith;
Fig. 8 illustrates a block diagram of an eighth system in accordance herewith;
Fig 9 illustrates a block diagram of a ninth system in accordance herewith; and
Fig. 10 illustrates a block diagram of a tenth system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

Systems in accordance herewith provide redundant communications pathways in fire and security systems employing mesh networks. Furthermore, since fire and security systems may use a hybrid combination of wired networks and wireless mesh elements, in another configuration, the wired and wireless portions can be integrated while providing redundant communications paths throughout the system.

In one aspect, each wireless mesh network can contain multiple controllers and a plurality of mesh elements. The mesh elements can include, without limitation, detectors of various types including security related detectors such as glass break detectors, position detectors, motion detectors or door detectors. Other detector types include ambient condition detectors such as fire detectors, gas detectors, thermal detectors, water or humidity detectors.

The controllers may be used to interface the elements of the mesh networks to the wired elements of the system. Each controller determines the parent/child relationships for the mesh elements and communicates with all mesh elements via a bidirectional time slotted, or, frequency allocation method. The time slotted or frequency allocation processes, as would be understood by those of skill are unique to each controller for a given mesh network. As a result, each controller receives communications from all network elements redundantly.

Each controller in a given mesh network will retransmit any communication received from the transmitting mesh elements to all of the mesh elements. In that way, all mesh elements receive all communications redundantly. The system communications are unaffected by the failure of all but one controller.

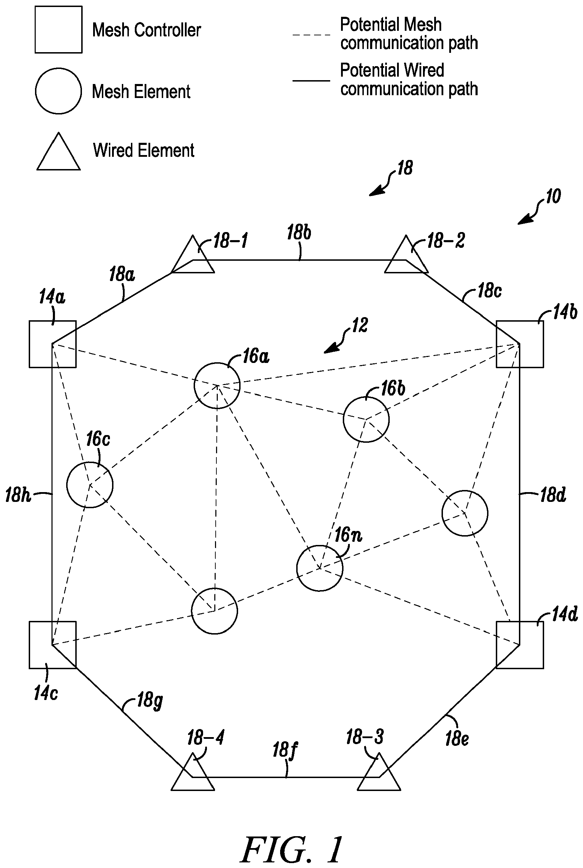

Fig. 1 illustrates a first embodiment 10. Here messages originating in the wireless mesh network 12 from detectors or other elements, such as 16a, 16b... 16n, are usually received by each controller, such as 14a, 14b, 14c and 14d. The respective controllers, such as 14a... 14d, in turn retransmit the message to the wireless elements, such as 16i, of the mesh network. The message is then transmitted on a wired path, or paths such as 18i, if the message has not already been received or transmitted on that path, or paths. This eliminates circular message paths.

In the event one of the wireless controllers, such as 14i, does not receive the message wirelessly within the system propagation time, the respective controller sends the message received by wire, such as from path 18i, to the wireless mesh elements with which it is in communication. The system communications are unaffected by the failure of all but the last controller.

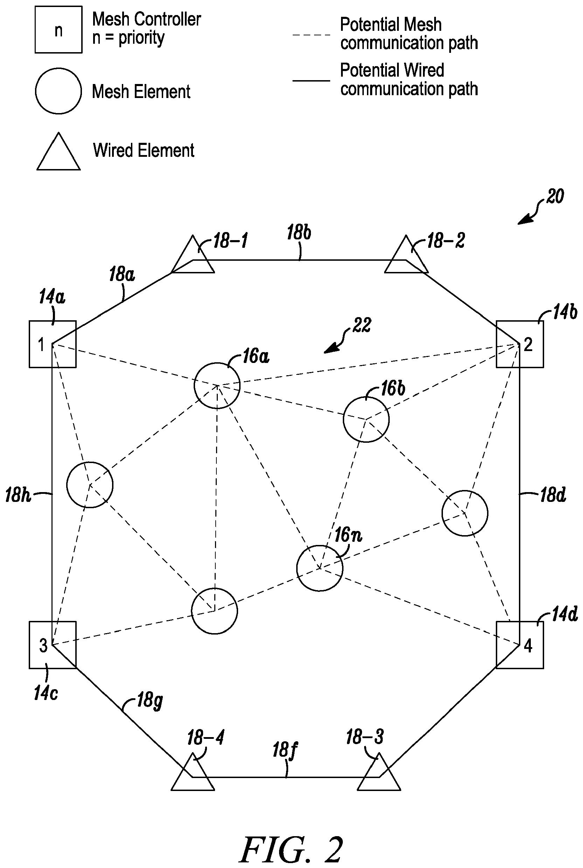

In another embodiment 20, illustrated in Fig.2, each wireless mesh network, such as 22, will contain multiple controllers and a number of mesh elements. It will be understood that elements and controllers of a type previously described above have been assigned an identical identification numeral that corresponds to that of Fig. 1. They need not be discussed further, except as set forth below.

The controllers may be used to interface the mesh network 22 to the wired elements 18-1, -2, -3 and 18-4 of the system 20. Each controller, such as 14a... 14d, determines the parent/child relationships for the mesh elements, such as 16i, relative to itself as if it were the master of communications of the mesh network.

As indicated in Fig. 2, a hierarchy of mesh controllers, 14a... 14d, can be established so that only one controller communicates with all mesh elements. Communications can be effected, without limitation, using a bidirectional time slotted or frequency allocation method.

When messages are received by the controller, such as 14a... 14d, from one or more mesh elements, such as 16i, including the redundant controllers, the controller with highest priority, such as 14a, retransmits the communications to all elements of the mesh network 22, including the redundant controllers. Advantageously with this process, all elements of the mesh network 22 receive all messages from all mesh elements.

Health messages within the mesh network 22 are transmitted periodically. When one or more health messages are missed, not received or responded to, by an element within the mesh, the element will switch to the next highest controller parent/child relationships and time slotted or frequency allocated scheme.

The highest priority controller retransmits messages received to the mesh elements if it has not already done so successfully, and then transmits the message on a wired path if the message has not already been received or transmitted on that path. The lower priority controllers transmit the message on a wired path if the message has not already been received or transmitted on that path. This eliminates circular message paths.

Controllers that receive a message on a wired path, such as 18a... 18n, transmit the message on other wired paths if the message has not already been received or transmitted on that wired path. For added redundancy, the lower priority controllers, such as 14b, 14c, 14d, may retransmit messages received on a wired path, such as 18i, wirelessly to the highest priority controller.

The communications of system 20 are unaffected by the failure of all but the last operating controller. It also exhibits reduced radio traffic requirements relative to the embodiment 10 of Fig. 1.

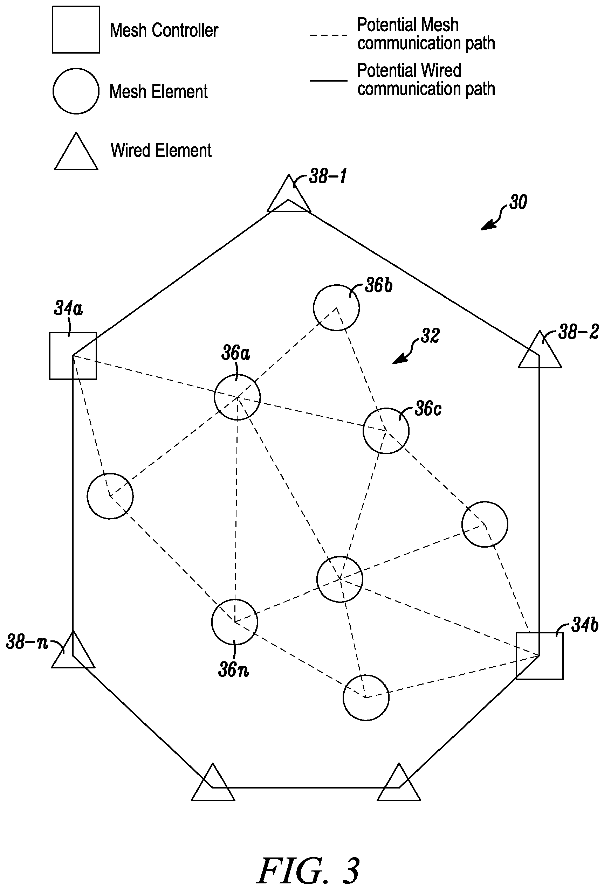

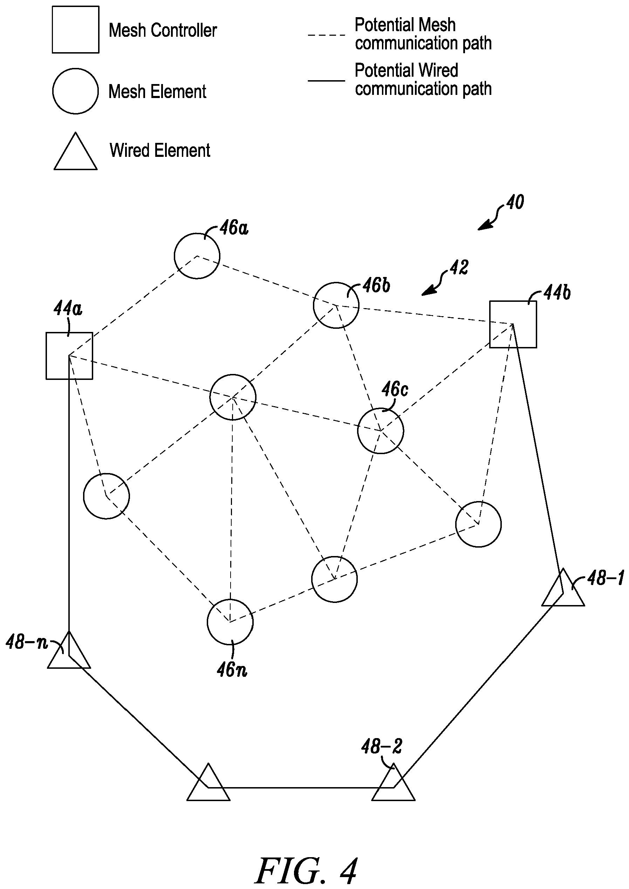

In other embodiments, 30, 40 illustrated in Figs. 3,4, each wireless mesh network, such as 32, 42, contains two controllers, such s 34a, 34b, and 44a, 44b, and a number of mesh elements, such as 36a..36n and 46a..46n. The controllers may be used to interface the mesh, and mesh elements to the wired elements, such as 38-1...38-n and 48-1 ...48-n of the respective system. The two controllers arrange the mesh parent/child structure such that one controller assumes the first time slot and the other controller the last time slot of a time slotted communication scheme. The controllers arrange the mesh such that each element has a redundant communication path to both controllers.

Each controller in a given mesh may retransmit any communication received from the transmitting mesh elements to all the mesh elements. In that way all mesh elements could receive all communications redundantly. A message originating in the mesh is retransmitted to the mesh elements by the controller that first receives it.

Controllers that receive a message transmit the message on wired paths if the message has not already been received or transmitted on that wired path. The system communications are unaffected by the failure of any one controller.

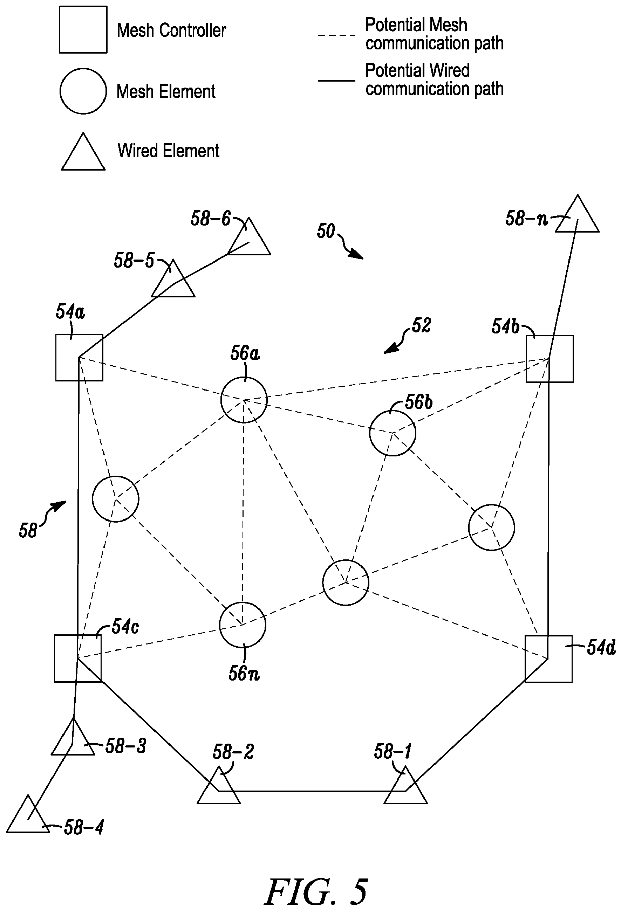

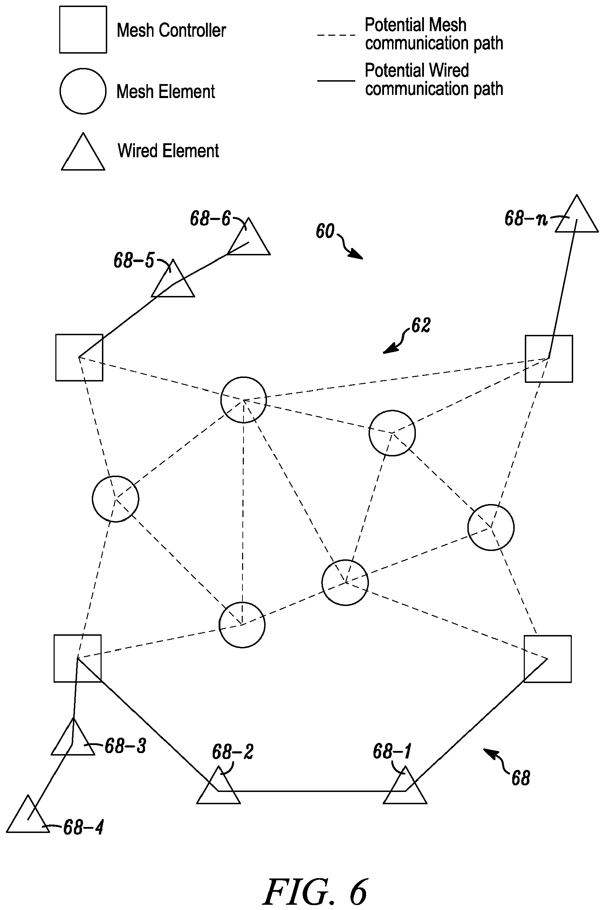

Variations of the embodiments including branches and non-redundant wire segments 58, 68 are also possible as illustrated in Fig. 5 in network 50 and Fig. 6 in network 60.

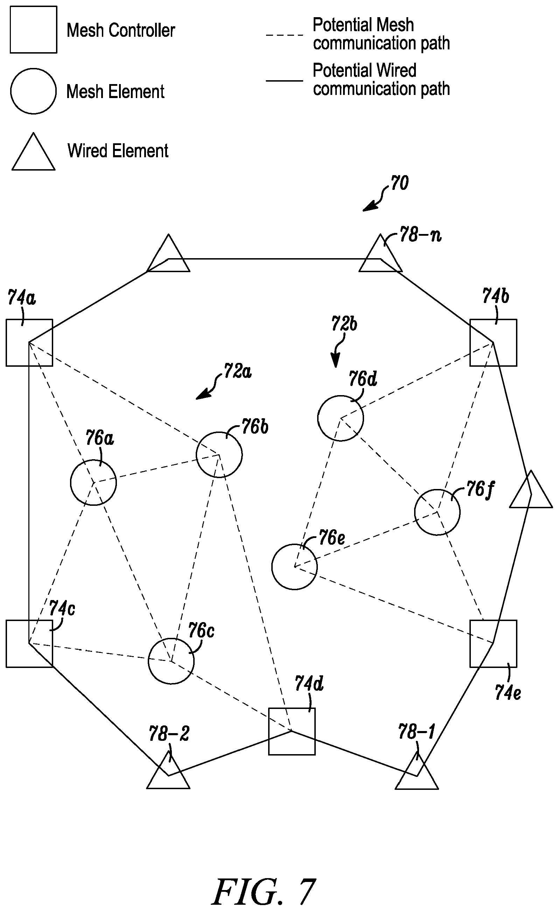

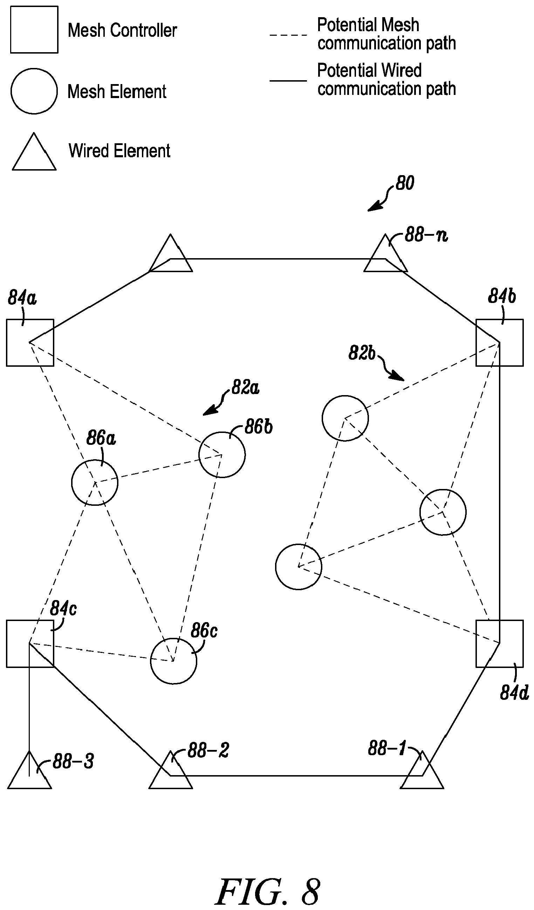

Additional embodiments may include multiple mesh networks 72a,b and 82a,b in various combinations as illustrated in Figs. 7 and 8.

In summary, the architecture of the network may be integrated into a peer-to-peer network as in the networks illustrated in Figs. 1-8. Such configurations are applicable to commercially available, or installed, networks such as the NOTIFIER Brand Fire-Network (NFN), The NOTIFIER Brand Digital Audio Loop (DAL), the FIRE-LITE Brand Lite Connect Network, or Gamewell Fire Control-type ring networks where each controller/element includes a transceiver in direct communication with one or two peer elements via wire or fiber. The architecture may also be applicable for use in a network of multiple I/O devices as mesh elements with multiple control panels as the mesh controllers for Safety Integrity Level (SIL) rated installations.

Advantageously, the above embodiments can be expected to meet the requirements of National Fire Protection Association (NFPA) Proposed Standard 72 2016 Class Designations A, N, and X. Further, the above embodiments can be incorporated into systems required to meet the SIL requirements as a measure of reliability and/or risk reduction. Examples include:
- ANSI/ISA S84 (Functional safety of safety instrumented systems for the process industry sector)
- IEC EN 61508 (Functional safety of electrical/electronic/programmable electronic safety related systems)
- IEC 61511 (Safety instrumented systems for the process industry sector)
- IEC 61513 (Nuclear Industry)
- EN 50402 (Fixed gas detection systems).

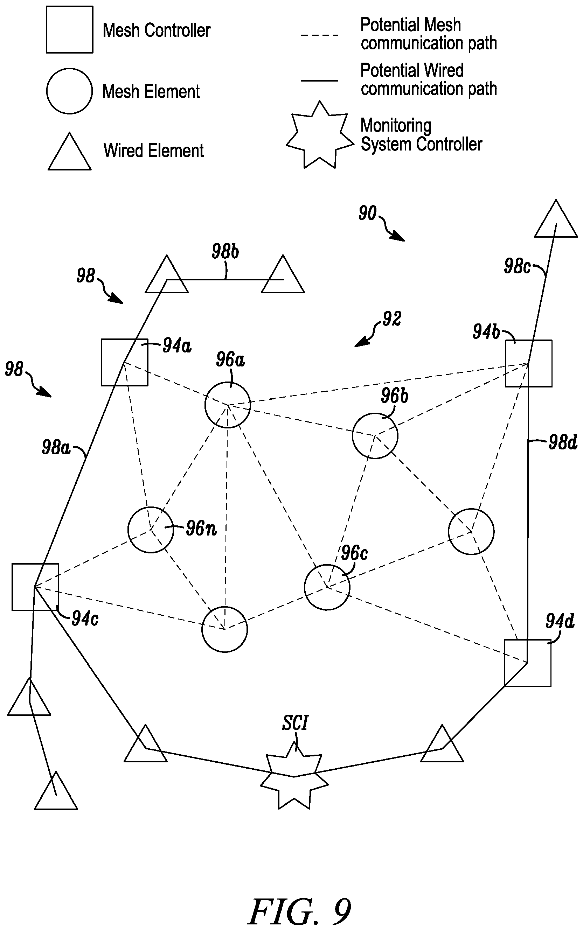

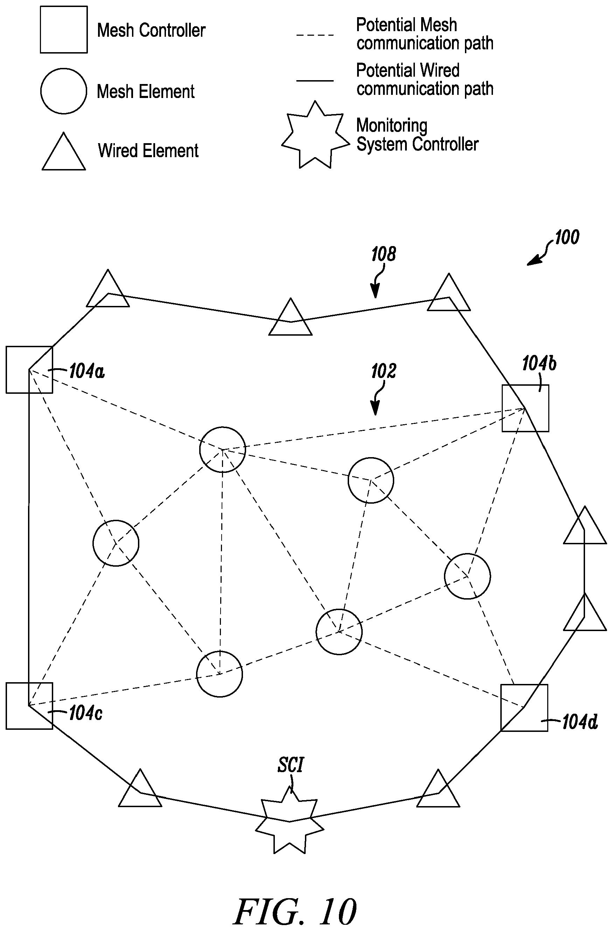

The architecture of the network may also be integrated into a bus network as in the networks 90, 100 of Figs. 9 and 10. In those embodiments, each wireless element 92, 102 is communicating with multiple mesh controllers 94, 104 that are connected to the same system controller CS1 via a multi-path bus connection 98, 108. This is applicable to signaling line circuit (SLC) networks or bus communication networks.

In summary, embodiments hereof advantageously avoid single point network failures. Also, such networks can be used as bidirectional transport mediums for messages in larger mixed medium networks.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

Preferred Embodiments of the Present Invention are as Numbered Below:
1. An apparatus comprising:
   a set of operational elements including a first plurality of wireless elements that communicate, at least in part, via a wireless medium, and a second plurality of wired elements that communicate via a wired medium; and
   a plurality of controllers wherein the controllers communicate with elements of the set via a plurality of redundant communications paths, and, wherein the loss of any one controller does not result in a loss of communications to any redundantly connected element.
2. An apparatus as in 1 wherein the loss of any one controller and the loss of any path do not result in a loss of communications to any redundantly connected element.
3. An apparatus as in 1 wherein the first plurality comprises first and second different wireless mesh communications networks and wherein the loss of more than one controller does not result in a loss of communications to any redundantly connected element provided that there is one controller operating in each mesh.
4. An apparatus as in 1 wherein the loss of multiple paths does not result in a loss of communications to any redundantly connected element.
5. An apparatus as in 1 wherein the controllers include circuitry to route wireless messages via a wired communications medium to the members of the second plurality thereby avoiding a single point of failure
6. An apparatus as in 1 wherein the first plurality comprises first and second different wireless mesh communications networks which communicate with each other via a wired medium.
7. An apparatus as in 1 wherein some members of the second plurality communicate only with a single other member of the second plurality.
8. An apparatus as in 1 where at least some of the elements are selected from a class which includes at least glass break detectors, position detectors, motion detectors, door detectors, fire detectors, gas detectors, thermal detectors, water or humidity detectors, control panels, system annunciation panels, smoke control panels, audio panels, visual indication panels, audible or visual output devices.
9. An apparatus as in 1 which includes a monitoring system control panel coupled to at least one of the controllers.
10. An apparatus as in 1 which includes circuitry to assign a priority value to each member of the plurality of controllers wherein the highest priority controller communicates with all members of the first plurality.
11. An apparatus as in 10 wherein health assessing messages can be transmitted among members of at least one of the pluralities.
12. A method comprising:
   providing a first plurality of wireless elements;
   providing a second plurality of wired elements;
   providing a plurality of controllers;
   providing a plurality of wireless communications paths, between one of the controllers and at least some of the elements of the first plurality; and
   providing at least one wired communications path between members of the second plurality of elements and one of the controllers, wherein an element of the first plurality is in wireless communications and is receiving and sending redundant communications messages to at least one of the controllers, and, wherein the loss of any one controller does not result in a loss of communications to any redundantly connected element.
13. A method as in 12 which includes providing communications on the wired path with at least one control controller, and, wherein the loss of any one controller and the loss of any path do not result in a loss of communications to any redundantly connected element.
14. A method as in 13 which includes coupling the element of the first plurality to elements of the second plurality via multiple paths.
15. A method as in 12 which includes establishing a priority for each of the controllers wherein the controller with the highest priority carries out communications with members of the first plurality.

## Claims

1. A monitoring system comprising:
a plurality of mesh elements;
a plurality of inter-element communications links; and
at least two different mesh controllers wherein the controllers are in wireless communication with at least some of the elements via at least some of the communications links, and other elements are in wired communication, via at least one different link, with at least one of the controllers wherein the loss of any one controller does not result in a loss of communications to any redundantly connected element.

2. A system as in claim 1 wherein the controllers communicate with each other via at least two different communications links, wherein at least one of the links comprises a wireless path, and the other comprises a wired path thereby avoiding single point failures.

3. A system as in claim 2 wherein the wired communications path extends substantially continuously between the other elements in wired communication with both controllers.

4. A system as in claim 2 wherein at least one of the other elements is in wired communication with just one of the other wired detectors or one controller.

5. A system as in claim 2 wherein some members of the plurality of elements communicate wirelessly with one another, and other members of the plurality of elements communicate wirelessly with one another wherein the wireless communications of some members are separate from the wireless communications of the other members of the plurality.

6. A system as in claim 2 wherein the loss of any one controller and the loss of any path do not result in a loss of communications to any redundantly connected element.

7. A system as in claim 1 wherein the plurality of inter-element communications links includes a first plurality of wireless elements that communicate, at least in part, via a wireless medium, and a second plurality of wired elements that communicate via a wired medium and the first plurality comprises first and second different wireless mesh communications networks and wherein the loss of more than one controller does not result in a loss of communications to any redundantly connected element provided that there is one controller operating in each mesh.

8. A system as in claim 2 wherein the loss of multiple paths does not result in a loss of communications to any redundantly connected element.

9. A system as in claim 1 wherein the plurality of inter-element communications links includes a first plurality of wireless elements that communicate, at least in part, via a wireless medium, and a second plurality of wired elements that communicate via a wired medium and the controllers include circuitry to route wireless messages via a wired communications medium to the members of the second plurality thereby avoiding a single point of failure.

10. A system as in claim 1 wherein the plurality of inter-element communications links includes a first plurality of wireless elements that communicate, at least in part, via a wireless medium, and a second plurality of wired elements that communicate via a wired medium and the first plurality comprises first and second different wireless mesh communications networks which communicate with each other via a wired medium.

11. A system as in claim 1 wherein the plurality of inter-element communications links includes a first plurality of wireless elements that communicate, at least in part, via a wireless medium, and a second plurality of wired elements that communicate via a wired medium and some members of the second plurality communicate only with a single other member of the second plurality.

12. A system as in claim 1 where at least some of the mesh elements are selected from a class which includes at least glass break detectors, position detectors, motion detectors, door detectors, fire detectors, gas detectors, thermal detectors, water or humidity detectors, control panels, system annunciation panels, smoke control panels, audio panels, visual indication panels, audible or visual output devices.

13. A system as in claim 1 further including monitoring system control panel coupled to at least one of the controllers.

14. A system as in claim 1 wherein the plurality of inter-element communications links includes a first plurality of wireless elements that communicate, at least in part, via a wireless medium, and a second plurality of wired elements that communicate via a wired medium and wherein the system further includes circuitry to assign a priority value to each member of the plurality of controllers wherein the highest priority controller communicates with all members of the first plurality.

15. A system as in claim 14 wherein health assessing messages can be transmitted among members of at least one of the pluralities.
